# EUROPEAN PATENT SPECIFICATION

(11) **EP 2 984 236 B1**
(45) Date of publication and mention of the grant of the patent: **10.06.2020**
(21) Application number: 14715953.7
(22) Date of filing: 09.04.2014
(51) Int. Cl.: E02B 3/16

(54) **METHOD AND DEVICE FOR COVERING AND WATERPROOFING JOINTS IN HYDRAULIC WORKS**
VERFAHREN UND VORRICHTUNG ZUR ABDECKUNG UND WASSERABDICHTUNG VON FUGEN BEI HYDRAULISCHEN ARBEITEN
PROCÉDÉ ET DISPOSITIF POUR COUVRIR ET RENDRE ÉTANCHES À L'EAU DES JOINTS DANS DES OUVRAGES HYDRAULIQUES

(30) Priority: 09.04.2013 IT MI20130560
(43) Date of publication of application: 17.02.2016
(73) Proprietor: Carpi Tech B.V., 2651 AV Berkel en Rodenrijs (NL)
(72) Inventor: SCUERO, Alberto Maria, NL-2651 AV Berkel en Rodenrijs (NL)
(74) Representative: Coloberti, Luigi
(86) International application number: PCT/EP2014/057153
(87) International publication number: WO 2014/166996

(56) References cited:
- EP-A1- 1 157 168
- WO-A1-01/06071
- WO-A1-2008/019658
- WO-A1-2013/142940
- DE-A1- 4 204 497
- DE-U1- 29 907 360
- GB-A- 1 285 556
- GB-A- 1 536 684
- US-A- 3 581 450
- US-A1- 2001 008 060

## Description

### BACKGROUND OF THE INVENTION

This invention refers to a method and device for covering and waterproofing joints, cracks and/or fissures between concrete members of hydraulic works, such as for example concrete and gravity dams, hydraulic galleries and water reservoirs, in which the body of the hydraulic work can be subject to deformation caused by interaction with the water in the basin, by differential settling, earthquakes or other reasons causing movements between concrete members of the hydraulic work.

### PRIOR ART

In the description that follows, specific reference is made to gravity dams in loose materials and to concrete dams, without limiting general applications of the method and of the waterproofing cover device for joints for any type of hydraulic work subjected to corresponding movements between opposite members of concrete material.

Dams made of loose materials substantially consist of an embankment of rolled compacted material having varying granulometry. In order to prevent water leakage through the body of the dam, a waterproofing cover or lining consisting of a plurality of side by side arranged concrete slabs that extend from the top of the dam to a base plinth are arranged on the upstream side; thus between opposite surfaces of the concrete slabs and the base plinth, vertical and longitudinal joints are formed that can extend over considerable lengths, ranging from tens to hundreds of metres or more, subjected to water pressures ranging from some metres to many tens of meters of water column.

As in the case of relative movements between opposite surfaces or members of a joint, or of a crack or fissure, a considerable loss of water would occur that would seep into the body of the dam, with consequent financial loss and danger for the same dam; during construction of the dam or subsequently, the joints must be sealed by suitable sealing devices commonly known as "waterstops", with the possibility of carrying out repairs at the tearing and/or breakage points of the waterproofing cover.

Owing to the geological features of the place, the dynamic behaviour of the dam body, or other accidental causes, over time the dam body may undergo significant deformation, with consequent opening of joints or relative sliding of tens of centimetres or more. It must also be considered that the seal of the joints, especially at or near the base plinth of a dam, has to bear considerable stress caused by the hydrostatic pressure of the water, which may be many tens or hundreds of metres high.

In general, the use of various types of copper waterstops or known waterproofing systems of bituminous material, PVC, EPDM, or of another type of material are not suitable to compensate for significant movements or settling between concrete members of the dam body or of the hydraulic works without losing their fundamental waterproofing features. Further, conventional waterstops make it difficult to perform maintenance and/or carry out repair operations subsequently a joint has been damaged.

Waterproofing devices for joints are known for example from GB 1.197.414, GB 930.627 and WO 00/06846; waterproofing devices of this type in general consist of an elastic diaphragm inside the concrete structure that is suitable to compensate only for small movements of a joint and which cannot be installed in any manner after the hydraulic work has been completed.

These problems have been partially solved by the method and device for covering and waterproofing joints of WO 00/34588. According to the disclosed method, an impermeable membrane of elastically yieldable synthetic material is fixed, in a taut condition straddling the joint, supporting the membrane by a plurality of metal slabs fastened to the concrete structure to slide and following the opening/closing movements of the joint.

This system is suitable only in the case of joints openings in one direction only and to compensate for only small settling movements of the body of the hydraulic work, of the order of few centimetres, without losing waterproofing features. Nevertheless, this system is completely unsuitable for compensating large deformations or sliding movements of the two-dimensional and three-dimensional joints.

In fact, in the case of relative three-dimensional movements of a joint, the support members consisting of metal slabs would become deformed in an irreversible plastic manner, applying excessive stress to the impermeable membrane, which, being excessively stressed, could tear at the edges of the support slabs, causing infiltration of water into the body of the hydraulic work and inevitable leakage of water at the breakage points.

Expansion joint covers of buildings or to cover and seal gaps between concrete members, or water stops, have been variously proposed in DE4204497, GB1536684, US3581450, US2001/0008060 and GB128556. In particular DE4204497 discloses an expansion joint between concrete members of a lining of concrete structures. The lining comprises a U-shaped sheet of elastically flexible plastic material, laid down into the gap, having outwardly turned flanges welded to adjoining plastics panels fastened to the outer surface of the concrete members of the structure; the joint is then covered with a cover plate to prevent inlet of foreign matter. The use of the expansion joint is suitable for refuse disposal areas.

GB1536684 discloses an expansion joint structure to cover and seal gaps deliberately left between concrete slabs for pavement, curtain wall structures, or arcuated pipe structures to provide sealing and keep out foreign matter or moisture, or retain foundation material such as sand.

A strip of elastomeric material is laid down and U-folded coextensive to the gap; a cover plate is again provided to protect the strip of plastic sheet; this solution is again suitable for small relative movements between the concrete members in one direction only in the plane of the cover plate.

US3581450 relates to an expansion joint for covering the gap between panels of a building, in which a pair of corrugated metal strips are joined to one another by an elongated U-shaped panel of flexible material and an elastomeric median strip to allow expansion along the longitudinal axis and in a perpendicular direction of the joint.

US 2001/0008060, figure 17 discloses a waterproofing joint between two concrete members of building structures in which the surface of the concrete members is paved with a synthetic asphalt, which is heated to penetrate into the capillary pores of the concrete; a waterproofing plastic cloth is subsequently attached to the synthetic asphalt, again paved with a second layer of hot molten synthetic asphalt to securely hold the waterproofing cloth.

GB1285556 - describes an expansion joint in which support sheet of polyethylene or polypropylene is made adhere to a waterproofing membrane by a pressure-sensitive adhesive such as a bituminous-rubber composition; no free relative movements between the waterproofing membrane and the support sheet is therefore allowed, unless to cause a deformation of the pressure-sensitive rubber composition.

As previously referred to, most of the expansion joints disclosed in the above mentioned prior art documents, merely suggests a structure of the joint suitable to be used at the environmental conditions in building structures, or similar applications; although GB1285556 describes the use of the joint even in quite high hydrostatic pressure condition, the key factor merely resides in the plastic deformation of the adhesive layer.

### OBJECTS OF THE INVENTION

The main object of the present invention is to provide a method and a device for covering and waterproofing joints between concrete members of hydraulic works, suitable to compensate also for significant movements, for example opening, closing or sliding movements in all directions, between opposite concrete members of a joint, of tens of centimetres or more, without causing excessive stress or breakage of a waterproofing membrane, and without losing the waterproofing features of the joint.

A further object of the invention is to provide a method and a cover device for waterproofing between concrete members of joints in hydraulic works, as disclosed above, which are particularly suitable for being used in concrete-face rock-fill dams (CFRD), or dams made of rolled and compacted concrete (RCC) and for other applications in water pressure conditions, and which are able to provide a suitable support for the waterproofing impermeable membrane, without it tearing or breaking even under significant stress caused by considerable hydrostatic pressure.

Yet another object of the invention is to provide a method and a cover device for waterproofing joints between concrete members of hydraulic works that are constructionally simple, enable the seal of the joint to be repaired easily, both in the absence and presence of water in the hydraulic work.

### SHORT DESCRIPTION OF THE INVENTION

These and still other objects of the invention are achievable by the method according to claim 1, and by the cover device for waterproofing joints according to claim 7.

WO 01/06071 A1 **has been considered as the closest prior** art and discloses a method according to the preamble of claim 1 and a a device according to the preamble of claim 7.

In particular, according to the invention, a method according to claim 1 has been provided for covering and waterproofing a gap of a joint between opposite concrete members of a hydraulic work by a cover strip transversely folded and longitudinally extending along the gap, fastened to the concrete members along elongated side edges, comprising the steps of:
providing the cover strip by superimposing at least one flexible waterproofing membrane in elastomeric material having a first elastic modulus, and at least one flexible support layer in synthetic material having a second elastic modulus greater than the first elastic modulus of the waterproofing membrane;
transversely folding the water proofing membrane and the support layer of the cover strip, and laying down the folded strip straddling the gap of the joint; and
sealingly fastening the elongated side edges of the folded cover strip to the concrete members keeping the support layer facing the concrete members, allowing a relative free movement between the superimposed waterproofing membrane and support layer of the folded cover strip.

According to another aspect of the invention, a cover device according to claim 7 has been provided for covering and waterproofing a gap of a joint between concrete members in a hydraulic work, according to the method mentioned above, in which the cover device comprises at least one impermeable waterproofing membrane in elastically yieldable or elastomeric material, and a support layer both sealingly fixed to the concrete members along longitudinal edges of the joint, characterised in that the cover device consists of:
a flexible cover strip comprising waterproofing membrane and a flexible support layer of synthetic material on at least one side of the waterproofing membrane;
in which the impermeable membrane and the flexible support layer comprise superimposed central bands, freely slidable and folded into a loop that extends longitudinally to the joint; and
in which the flexible support layer has an elastic modulus and breakage strength greater than those of the waterproofing membrane of the cover device.

The impermeable membrane and the flexible support layer can be any way folded into a loop; for example they can form one or more longitudinal loops positioned inside or outside the gap of the joint. The folding and superimposing of the waterproofing membrane and of the flexible support layer must anyway be such as to maintain the membrane freely in contact with the flexible support layer, or at a short distance therefrom, so as to limit the elastic deformation of the waterproofing membrane, while maintaining the membrane below the critical breakage point thereof. In this manner, the cover strip is also suitable to withstand great stress caused, for example by high hydrostatic pressures of the water in the hydraulic work, in conditions of significant openings of the joint, or of relative movements in all directions between the concrete members of the joint.

The device for covering and waterproofing joints in hydraulic works according to the present invention is thus a combination of various flexible layers that are foldable into a loop that are superimposable on one another, in particular:
a) at least one impermeable waterproofing membrane, of elastically extendible synthetic or elastomeric material, having a waterproofing function, for example consisting of a geomembrane having a thickness between 2 to 6 cm and an elastic modulus E1 between 0,010 and 0,030 GPa at ambient temperature;
b) at least one flexible support layer, of fiber reinforced synthetic material positioned on one or both sides of the waterproofing membrane, for example consisting of a geotextile or another suitable geosynthetic textile material, having stiffness or an elasticity modulus E2 and breakage strength greater than those E1 of the waterproofing membrane; the elastic modulus E2 of the support layer preferably will be between 2 and 8 GPa or more that is from 40 to 70 times greater than the modulus E1. This ensures that the flexible support layer limits the deformation of the waterproofing membrane, thus preventing the latter from reaching breakage conditions and resisting most stress. Further, as the waterproofing membrane is subjected to little stress, with the large opening of the joint or corresponding movements between concrete members of the joint, the waterproofing membrane will thus be able to withstand greater hydrostatic pressure of some tens of water column and more; if the flexible support layer is provided on both sides of the waterproofing membrane, this will be advantageous if there will be hydrostatic stress on one or both sides, for example a negative pressure in the event of emptying of the basin or of a hydraulic structure in general;
c) an intermediate textile layer (optional) between the waterproofing membrane and the flexible support layer, having an anti-puncturing function. The intermediate textile layer can be separated from or coupled to the waterproofing membrane, for example in the form of a geocomposite; this textile layer, in addition to performing the anti-puncturing function, also contributes to increasing the resistance of the impermeable membrane, because the geocomposite can withstand greater pressure than the waterproofing membrane alone;
d) lastly, an external protective textile layer (optional) can be provided, for example consisting of a geotextile suitable to the folded into a loop together with the waterproofing membrane and of the flexible support layer.

For the purposes of the present description, "joint" is defined as the space or gap between facing surfaces of two concrete members of any hydraulic work, or a crack or fissure. It is also stated that:
"geomembrane" is consisting of a flat sheet of waterproofing polymeric thermoplastic material, or of another type of elastomeric material;
"geotextile" is defined as a polymeric synthetic material suitable for coming into contact with the ground or another material for the intended use;
"geocomposite" is defined as a flat manufactured or assembled material using at least one geomembrane and a geotextile.

### SHORT DESCRIPTION OF THE DRAWINGS

These and other features of the method and the cover device for waterproofing joints and/or cracks and/or fissures between concrete members of hydraulic works, will be disclosed further below with reference to a concrete-face rock-fill dam and to the attached drawings, in which:
Figure 1 is a cross sectional view of a concrete-face rock-fill dam comprising a device for covering and waterproofing joint according to the invention;
Figure 2 is an enlarged detail of a joint of figure 1 in a closed condition, between a concrete slab on the upstream side of the dam and a base plinth;
Figure 3 is an enlarged detail similar to figure 2, with the joint in an open condition;
Figure 4 is an enlarged detail of the covering and waterproofing strip;
Figures 5 to 7 schematically show possible constructional steps of the device for covering and waterproofing the joint according to figure 2;
Figure 8 is an enlarged detail of figure 2;
Figures 9 and 10 show some different solutions of the cover device;
Figure 11 is a detail similar to the preceding figures, with the folded cover device outside the joint;
Figure 12 is a detail similar to figure 11, after a relative sliding movement has occurred between the two concrete members of the joint;
Figure 13 is a detail similar to figure 11, in which the strip of the cover device has been double looped outside the joint;
Figure 14 shows the GM and the SL stress-strain curve for the waterproofing membrane and support layer of the cover strip.

### DETAILED DESCRIPTION OF THE INVENTION

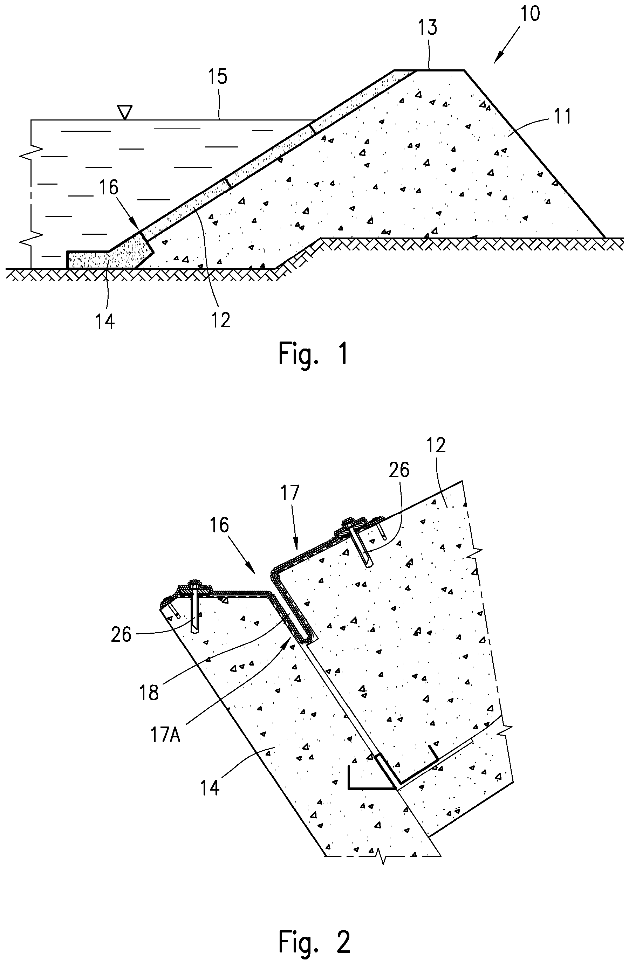

With reference to figures 1 to 8, a first preferential embodiment will be disclosed of a device for covering and waterproofing joints between concrete members of hydraulic works, according to the invention.

In figure 1 the cross sectional view of a dam 10 has been represented, comprising a body 11 consisting of an embankment of loose material provided with a protective cover device consisting of a plurality of adjacent concrete slabs 12 that extend from the top 13 of the dam, downwards at a concrete base plinth 14. With reference number 15 in figure 1 a possible water level retained by the dam 10 has been indicated whereas the reference number 16 indicates a longitudinal joint that runs along the dam 10 between the concrete slabs 12 and the base plinth 14. The constructional method of the dam 10 can be of any type and is not disclosed as not forming part of the invention.

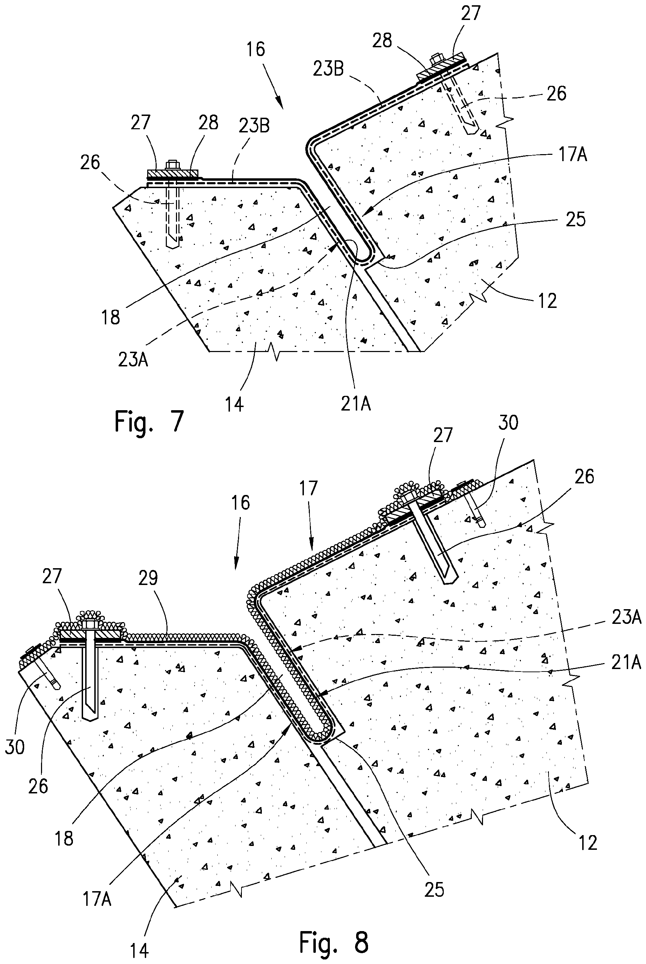

As shown in the example in figure 2 and in the enlarge detail of figure 8, the device for covering and waterproofing the joint 16 consists of a flexible strip 17 comprising a plurality of superimposed layers, that axially extend longitudinally to the joint 16; the strip 17 straddles the joint 16 and is transversally folded into a U form, so as to provide a central loop that extends in a deep longitudinal gap 18 between the facing side surfaces of two opposite concrete members of the dam, which in the example under consideration consist of the concrete slabs 12 and the base plinth 14.

Figure 2 shows the joint 16 and the cover strip 17 of the covering and waterproofing device in an original condition in which the joint is in a closed condition, with the dam that has not yet undergone any deformation; in these condition the external forces due to the hydrostatic pressure of the water existing in the hydraulic work acting on the cover strip pushes the two sides of the loop 17A provided by U-folded cover strip 17, against the side walls of the gap 18; in this manner the cover strip 17 is not subject to any substantial stress and/or deformation, even at a significant depth of the water 15, which in the case of dams can be of the order to tens or hundreds of metres.

Still with reference to figure 2, the flexible cover strip 17 for protecting and waterproofing the joint 16 is sealingly fixed along the longitudinal edges thereof, straddling the gap 18, for example by means of a plurality of metal pins 26 spaced apart and fixed in the concrete of the slabs 12 and of the plinth 14, in a manner per se known.

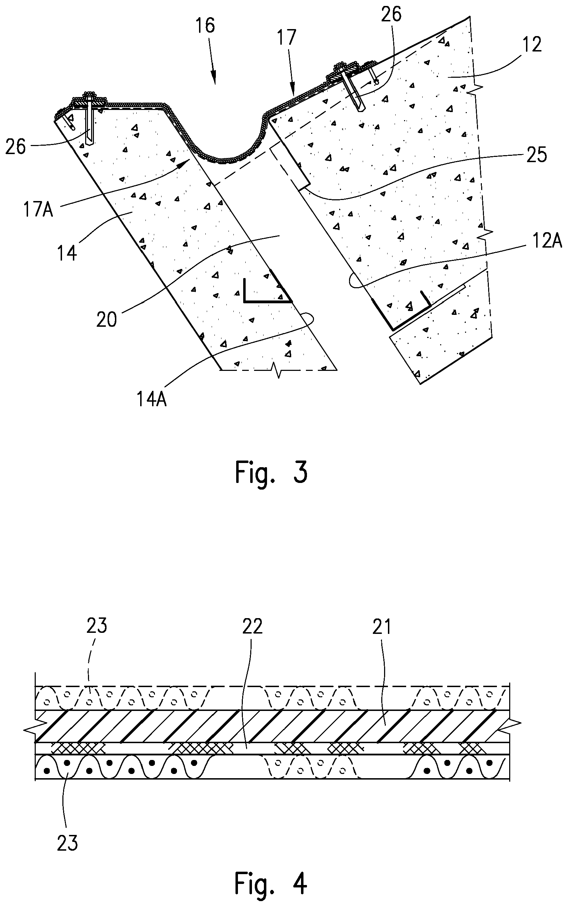

Figure 3 on the other hand shows a possible open condition of the joint 16, in which the slab 12 has moved away from the plinth 14, for example because of local deformation of the embankment 11 constituting the body of the dam 10. In these conditions, between opposite surfaces of a slab 12 and the plinth 14 a large cavity 20 is formed that, depending on the deformation, can vary from a few centimetres to a few ten centimetres or more. This relative movement between the two concrete members 12 and 14, can cause both moving away and relative rotation, lowering or raising of one member in relation to the other, or several movements simultaneously.

In each of these conditions the part of the strip 17A that was initially folded into a loop and was in a non-stressed condition into the gap 18 of the joint, can now freely extend to compensate for any shift between the slab 12 and plinth 14 within the limits permitted by the width of the cover strip, and of a transverse permissible extension thereof; the cover and waterproofing strip 17 thus has to be designed in such a manner as to be able to withstand a large opening of the joint, remaining waterproofing of the same water head.

In this connection, as shown in the detail of figure 4, the cover strip 17 has a composite or layered structure consisting of several overlapped layers that are in contact with and slidably independent of one another.

In particular, in the example in figure 4, the cover strip 17 comprises a first layer consisting of a impermeable waterproofing membrane 21 made of an elastically yielding synthetic material, that has appropriate elastic modulus and thickness, for example a geomembrane made of PVC or another synthetic material suitable for the intended use, that may be combined with a second protective or anti-puncturing layer 22, provided by a suitable flexible geotextile or fiber reinforced synthetic material that has been made to adhere to the geomembrane 21 contributing to increasing the resistance thereof.

The waterproofing cover strip 17 in the example shown further comprises a third support layer 23 for the impermeable membrane 21, consisting of a flexible layer of a geotechnical synthetic textile material that extends over the entire length of the impermeable membrane 21; in particular the support layer 23 can consist of a geosynthetic or fiber reinforced material having great mechanical resistance features than the waterproofing membrane 21, as already mentioned, for example consisting of a textile substrate to which longitudinal strands in synthetic fibre are sewn for supporting and withstanding the tension generated in the cover strip 17; the surface of the flexible support layer 23 to come into contact with concrete members 12, 14 must also have resistance to the abrasion.

The cover strip 17 consisting of the membrane 21, the protective geotextile 22 and the geosynthetic support layer 23, in general it has to have flexibility features such as to enable the strip to be fold inside or outside the gap 18 of the joint, so as to form at least one freely extendible loop, ensuring waterproofing and mechanical resistance features in the various operative conditions.

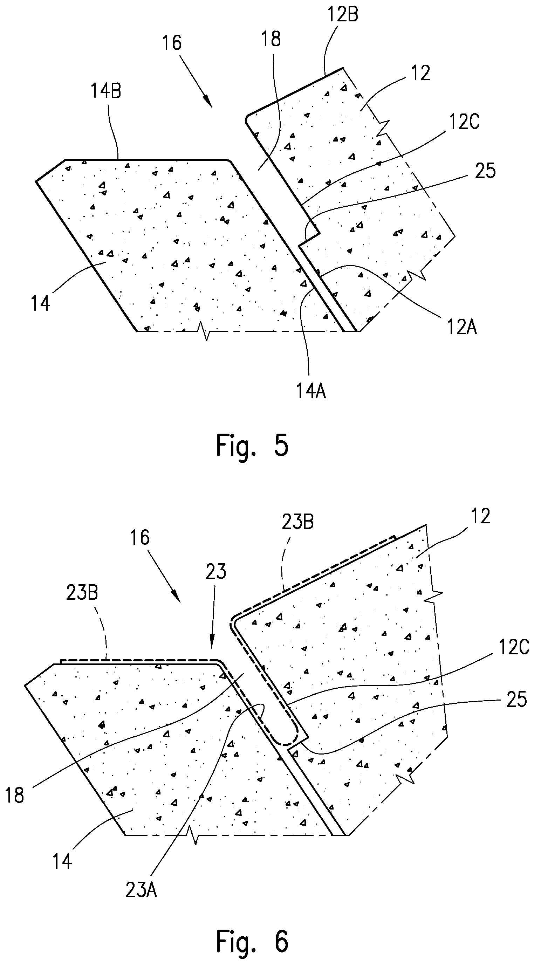

Figures 5 to 8 show, by way of example, certain steps of the method for protecting and waterproofing the joint 16, or another joint between concrete members of a hydraulic work, according to a possible embodiment, in which the cover strip 17 has a central band 17A folded into a loop inside the gap 18 of the joint 16; in the various figures the same reference numbers as for the preceding figures have been used to indicate similar or equivalent parts.

Figure 5 shows a detail of the joint 16 without the cover strip 17; in this case the gap 18 is provided by differently configuring the two facing surfaces 12A of the slab 12, and 14A of the plinth 14. In particular, the surface 12A of the slab 12 is configured with a step 25, at a distance from the upper surface 12B such as to form a deep gap 18 that opens upwards. The width of the step 25 and the position or distance thereof from the upper surface 12B of the slab 12, have to be chosen in such a way as to form a gap 18 that is sufficiently wide and deep to house a certain length, folded into a loop, of the impermeable cover strip 17, as shown in figures 2 and 8. In particular the width and depth of gap 18, and consequently the width of the central band folded into a loop of the cover strip 17, have to be chosen in such a manner as to enable maximum transverse elongation possible of the cover strip 17, according to the maximum opening expected for the joint 16, i.e. the maximum corresponding shift between the slab 12 and plinth 14; more in general between opposite concrete members of a joint, that are envisaged or envisageable for a specific hydraulic work. It is not ruled out that the gap 18 can have another shape or other dimensions than those shown; merely by way of example, it is appropriate for the depth of the groove 18 to be at least to twice or several times the width thereof so as to house a suitable width of strip 17 folded into a loop, that is free to extend transversely and adapt also to exceptional movements between the two concrete movements 12 and 14.

The flexible support layer 23 is thus positioned longitudinally by being straddled over the joint 16, facing the concrete members, taking care to fold the flexible support layer 23 into a "U" shape so as to form a longitudinal loop 23A, as shown in figure 6. The U-shaped loop 23A of the flexible support layer 23 can extend over part or the entire depth of the gap 18.

After positioning and extending the flexible support layer 23, as mentioned previously, the impermeable waterproofing membrane 21 is positioned, being kept straddled over the joint 16, superimposing the impermeable membrane 21 to the flexible support layer 23 that has already been positioned and folded into a loop in the gap 18.

In particular, the impermeable membrane 21, or the geocomposite 21, 22, will be straddled over the joint 16 being in turn crosswise folded into a "U" shape in the gap 18 to provide a loop 21A that substantially corresponds to the loop 23A of the flexible support layer 23. In other words, the crosswise folding at the impermeable membrane 21 into a loop 21A inside the gap 18 must be such as to take the loop 21A as far as possible into contact with the flexible support layer 23, or any way at a distance such that through the action of the external forces, the impermeable membrane 21 deforms slightly and rests against the flexible support layer 23 without reaching the breakage deformation limit, thus without losing the waterproofing function inasmuch as the greater stress is supported by the flexible layer 23.

From the various figures, in particular from figure 6 and 7, it is noted that the flexible support layer 23, consequently the waterproofing membrane 21, or the geocomposite from which a side strip of textile has been removed at the anchorage points, extends on two sides of the gap 18 with a large wing 23B frictionally in contact with the surface of the two concrete members 12 and 14.

Once the impermeable waterproofing membrane 21, or the geocomposite 21, 22, has been positioned and folded into the gap 18, being superimposed on the flexible support layer 23 facing the concrete members 12, 14, the latter and the membrane 21 are sealingly anchored along their longitudinal edges, in any suitable way; for example, the anchoring can be achieved by a plurality of pins 26, spaced apart by a constant pitch, fastened in a manner per se known at corresponding holes made on two sides of the gap 18, in the corresponding concrete members 12, 14 of the joint 16; the sealing fastening of the two longitudinal edges of the cover strip 17 can be made, for example, by a steel plate 27, interposing a suitable seal washer 28 between the steel plate 27 and the impermeable waterproofing membrane 21.

After installation and anchorage of the impermeable membrane 21 and of the flexible support layer 23 of the covering strip 17, in the same manner previously disclosed a protective textile layer 29 is installed, also being folded into the groove 18, against the impermeable waterproofing membrane 21; the protective textile layer 29 is positioned over all the strip 17 being superimposed on the pins 26 and anchored along the side edges by respective pins 30, as shown in figure 8.

The device for covering and waterproofing joints in hydraulic works according to the invention, can be used to form a watertight seal along longitudinal joints that run over the entire length of the hydraulic work, or part of the work, as occurs, for example, between cover slabs of the upstream side of a dam and a base plinth, and along vertical joints between adjacent slabs.

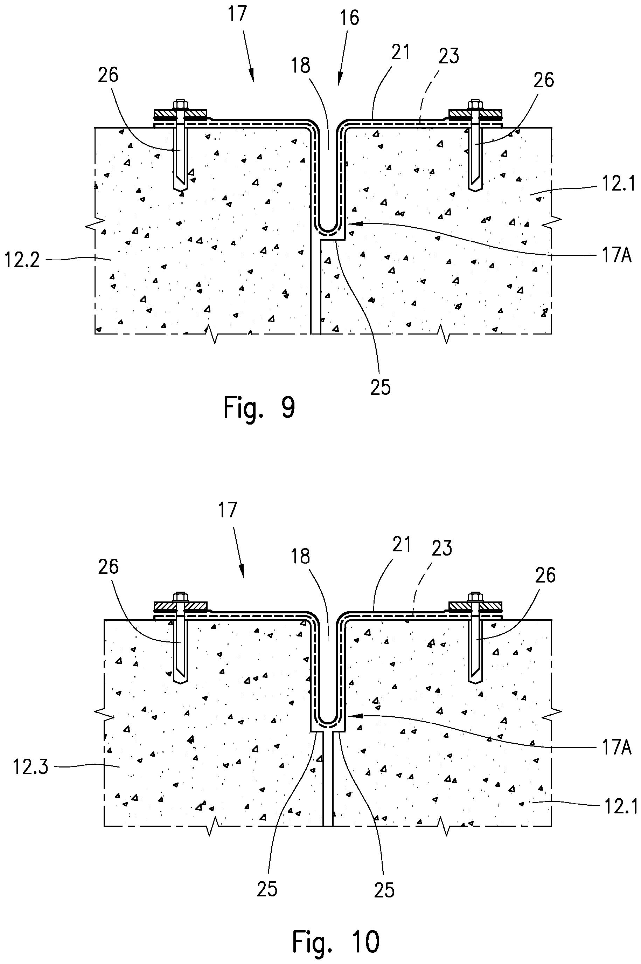

Figure 9 shows, by way of example, a device for covering and waterproofing a vertical joint 16 between two adjacent concrete slabs 12.1 and 12.2; in the case of figure 9, the gap 18 is again between the opposite surfaces of the two slabs 12.1 and 12.2, providing the formation of a single step 25 on the right slab 12.1 and the installation of an impermeable waterproofing strip 17 covering the joint in a manner substantially similar to what has been disclosed, for the example of the preceding figures.

Figure 10 shows a possible variant, according to which the gap 18 is obtained by configuring both the slabs 12.1 and 12.3 with a respective side step 25, and in which the two opposite steps 25 are configured in such a manner as to form a gap 18 providing a cover strip 17 for covering the joint 16 to be installed in the same manner as in the previously disclosed examples.

As mentioned previously, figure 3 shows the joint in an open condition depending on the deformation of the dam, and the relative free extension of the folded band 17A of the cover strip 17 for waterproofing and covering the joint; in these conditions, the transfer of the stress from the support layer 23 to the slab 12 and to the plinth 14, i.e. to the two equivalent concrete members of the hydraulic work, is not supported by the steel plates 27 only and by the pins 26, but the stress is also transferred by the frictional force between the surfaces of the concrete members and the side wings 23B of the support layer 23 subject to the hydrostatic pressure of the water that interacts with the hydraulic work.

In order to check the operation and seal of the device for covering and waterproofing joints according to the invention, experimental tests have been performed using a suitable autoclave, after choosing suitable materials for the flexible support layer and for the impermeable membrane, and for the anchoring system.

A system consisting of a geocomposite in PVC, and of a support geotextile, positioned on a plane having a cavity comparable to dimensions of a possible open joint, was closed in an autoclave and the peripheral edge being sealingly fixed; a relevant hydrostatic pressure was then created inside the autoclave that was equal to a water column of about 60 meters and was then maintained for a great number of hours.

At the end of the tests a slight elongation of the support geotextile and a water loss that was deemed to be negligible were detected. The experimental tests provided data completely positive, confirming the capability of the cover and waterproofing device to operate for a long time, even at high pressure, and to compensate also for large joint openings.

According to the preceding examples, the flexible support layer 23 and the waterproofing membrane 21 are installed and folded in the gap 18, in subsequent steps; as an executive variant it is nevertheless possible to install and fold into a loop at the same time as the flexible support layer 3 and the waterproofing membrane 21, maintaining the flexible support layer 23 and the membrane 21 superimposed during installation; other methods for folding the flexible support layer 23 and the waterproofing membrane 21 are possible that are different from the method shown, the general features of the method of the device for covering and waterproofing joints in hydraulic works according to the invention remaining the same.

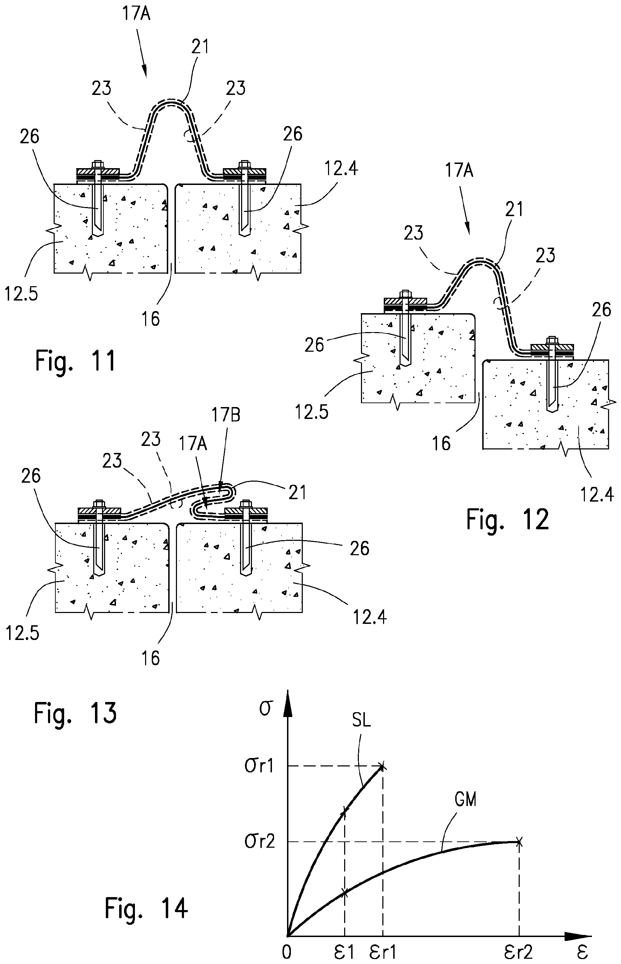

Figures 11 and 12 show schematically, a further solution in which the cover and waterproofing strip 17 is folded to form a loop 17A outside the joint 16; again in figures 11 and 12 the same reference numbers as for the previous figures have been used to indicate similar or equivalent parts; this solution is also suitable in the case of cracks and/or fissures in the structure made of concrete of a hydraulic work.

Figure 11 shows the two concrete members 12.4 and 12.5 that form the joint 16, in the original position a hydraulic work, for example in the case of a hydraulic gallery, or the side walls of a canal; as in this case the loop 17A of the covering and waterproofing strip 17 may be subjected to hydrostatic pressure on the upper side, or to both sides, it is possible to provide a support layer 23 on one or both sides of the waterproofing membrane 21, as shown schematically in figure 4.

The next figure 12 shows schematically the condition of the cover strip 17, if a relative sliding movement of the concrete member 12.4 occurs with respect to the concrete members 12.5; also in this case the cover and waterproofing strip 17 will behave in exactly the same manner as previously disclosed, both in the case of sliding movement between the two concrete members 12.4, 12.5 as shown, and in the case of opening of the joint 16.

Figure 13 shows a further solution similar to those of figures 11 and 12, from which it differs by the fact that now the cover and waterproofing strip 17 has been folded outside the joint 16 to form a double loop 17A, 17B suitable to compensate for a larger movement between the two concrete members 12.4 and 12.5; accordingly, also in figure 13 the same reference numbers have been used to indicate similar or equivalent parts.

Figure 14 shows schematically a first curve GM illustrative of the stress/strain features of the waterproofing membrane 21, and a second curve SL illustrative of the stress/strain features of the flexible support layer 23, and the synergetic behaviour therebetween; in particular figure 14 shows the ratio existing between the unitary stress σ and the unitary elongation or strain ε relating to the elastic modulus E1 for curve GM and E2 for curve SL.

From the curve SL of figure 14 it is noted that the flexible support layer 23 has a Young or elasticity modulus E1= σ/ε and breakage point σr1, εr1 greater than the Young or elasticity modulus E2= σ/ε and breakage point σr2, εr2 of the waterproofing membrane; thus in any stressed condition of the cover strip 17, as for example indicated in ε1, the membrane 21 will be subject to stress, and to elongation that are significantly less than the those of the support layer 23.

It is thus understood that other modifications or variations can be made to the method and to the device for waterproofing joints in hydraulic works subject to deformation over time, in particular to the conformation of the longitudinal joint 16, of the entire cover strip 17, or the component parts thereof, or to the methods and means of sealingly anchoring the waterproofing cover strip 17 to two opposite concrete members of any hydraulic work, in particular concrete-face rock-fill dams without thereby departing from the claims.

## Claims

1. A method for covering and waterproofing a gap (18) of a joint (16) between opposite concrete members (12, 14) of an hydraulic work (10) by a cover strip (17) transversely folded and longitudinally extending along the gap (18) sealingly fastened to the concrete members (12, 14) along elongated side edges,
in which the cover strip (17) comprises at least one flexible waterproofing membrane (21) in elastomeric material having a first elastic modulus (E1), and at least one flexible support layer (23) in synthetic textile material having a second elastic modulus (E2) greater than the first elastic modulus (E1) of the waterproofing membrane (21);
**characterised by** the steps of
superimposing the flexible waterproofing membrane (21) and the flexible support layer (23);
transversely folding the waterproofing membrane (21) and the support layer (23) of the cover strip (17);
laying down the folded strip (17) straddling the gap (18) of the joint (16);
sealingly fastening the elongated side edges of the folded cover strip (17) to the concrete members (12, 14) keeping the support layer (23) facing the concrete members (12, 14) of the joint (16); and
allowing a relative free movement between the superimposed waterproofing membrane (21) and support layer (23) of the folded cover strip (17).

2. The method for covering and waterproofing a joint (16) according to claim 1, **characterised by** folding into a loop (21A, 23A) a central band of the waterproofing membrane (21) and of the flexible support layer (23), directly inside the gap (18) of the joint (16) between said concrete members (12, 14) of the hydraulic work (10).

3. The method for covering and waterproofing a joint (16) according to claim 1, **characterised by** folding into a loop (21A, 23A) a central band of the waterproofing membrane (21) and of the flexible support layer (23), outside the joint (16) successively threading the folded cover strip (17) into the gap (18) of the joint (16).

4. The method for covering and waterproofing a joint (16) according to anyone of the preceding claims, **characterised by** configuring the support layer (23) with side wings (23B) frictionally extending along contact surfaces of the concrete members (12, 14) of the hydraulic work (10).

5. The method for covering and waterproofing a joint according to anyone of the preceding claims, **characterised by** overlapping a further protective textile layer (29) to the waterproofing membrane (21), and folding into a loop the further protective textile layer (29) against the waterproofing membrane (21) inside the joint (16).

6. The method for covering and waterproofing a joint according to the preceding claims, **characterised by** folding into a loop the waterproofing membrane (21), the support layer (23) and the protective textile layer (29) while maintaining them in contact with one another.

7. A device suitable for covering and waterproofing a gap (18) of a joint (16) between concrete members (12, 14) in hydraulic works (10) according to the method of one or more claims 1 to 6, in which the cover device (17) comprises at least one flexible waterproofing membrane (21) in elastically yieldable elastomeric material and a flexible textile support layer (23) both sealingly fixed along their longitudinal edges to the concrete members (12, 14) of the joint (16), and
in which the flexible support layer (23) is configured with an elastic modulus (E2) higher than the elastic modulus (E1) of the waterproofing membrane (21);
**characterised in that** the cover device (17) consists of:
a flexible cover strip (17) comprising a flexible waterproofing membrane (21) superimposed to the flexible support layer (23) on at least one side of the waterproofing membrane (21);
in which the waterproofing membrane (21) and the superimposed support layer (23) comprise a longitudinal band folded in a loop (21A, 23A) longitudinally extending to the joint (16); and
in which the flexible waterproofing membrane (21) and the flexible support layer (23) comprise superimposed central bands (21A, 23A), freely slidable and folded into a loop that longitudinally extends to the joints (16).

8. The device for covering and waterproofing a joint (16) according to claim 7, **characterised in that** the elastic modulus (E2) of the support layer (23) is from 40 to 70 times and more higher than the elastic modulus (E1) of the waterproofing membrane (21).

9. The device for covering and waterproofing a joint (16) according to claim 7, **characterised in that** the elastic modulus (E1) of the waterproofing membrane (21) is comprised between 0,010 and 0,030 GPa at ambient temperature, while the elastic modulus of the support layer (22) is comprised between 2 and 8 GPa.

10. The device for covering and waterproofing a joint (16) according to claim 7, **characterised in that** the flexible support layer (23) extends with side wings (23B), frictionally contacting facing surfaces of said concrete members (12, 14) of the hydraulic work (10).

11. The device for covering and waterproofing a joint (16) according to claim 7 **characterised in that** the support layer (23) is consisting of a fiber reinforced geotextile.

## Patentansprüche

1. Verfahren zum Abdecken und Wasserabdichten eines Spalts (18) einer Fuge (16) zwischen gegenüberliegenden Betonelementen (12, 14) eines hydraulischen Werkes (10) durch einen Abdeckstreifen (17), der quer gefaltet ist und sich in Längsrichtung entlang dem Spalt (18) dichtend befestigt an den Betonelementen (12, 14) entlang länglicher Seitenkanten erstreckt,
wobei der Abdeckstreifen (17) mindestens eine flexible wasserabdichtende Membran (21) aus Elastomermaterial mit einem ersten elastischen Modul (E1) umfasst und mindestens eine flexible Trägerschicht (23) aus synthetischem Textilmaterial mit einem zweiten elastischen Modul (E2), das größer ist als das erste elastische Modul (E1) der wasserabdichtenden Membran (21);
**gekennzeichnet durch** die Schritte
Überlagern der flexiblen wasserabdichtenden Membran (21) und der flexiblen Trägerschicht (23);
Quer Falten der wasserabdichtenden Membran (21) und der Trägerschicht (23) des Abdeckstreifens (17);
Ablegen des gefalteten Streifens (17), den Spalt (18) der Fuge (16) überspannend;
abdichtendes Befestigen der länglichen Seitenkanten des gefalteten Abdeckstreifens (17) an den Betonelementen (12, 14), wodurch die Trägerschicht (23) den Betonelementen (12, 14) der Fuge (16) zugewandt bleibt; und
Zulassen einer relativ freien Bewegung zwischen der überlagerten wasserabdichtenden Membran (21) und Trägerschicht (23) des gefalteten Abdeckstreifens (17).

2. Verfahren zum Abdecken und Wasserabdichten einer Fuge (16) nach Anspruch 1, **gekennzeichnet durch** Falten in eine Schleife (21A, 23A) eines zentralen Bandes der wasserabdichtenden Membran (21) und der flexiblen Trägerschicht (23), direkt innerhalb des Spalts (18) der Fuge (16) zwischen den Betonelementen (12, 14) des hydraulischen Werkes (10).

3. Verfahren zum Abdecken und Wasserabdichten einer Fuge (16) nach Anspruch 1, **gekennzeichnet durch** Falten in eine Schleife (21A, 23A) eines zentralen Bandes der wasserabdichtenden Membran (21) und der flexiblen Trägerschicht (23), wobei der gefaltete Abdeckstreifen (17) außerhalb der Fuge (16) sukzessive in den Spalt (18) der Fuge (16) eingefädelt wird.

4. Verfahren zum Abdecken und Wasserabdichten einer Fuge (16) nach einem der vorstehenden Ansprüche, **gekennzeichnet durch** Konfigurieren der Trägerschicht (23) mit Seitenflügeln (23B), die sich reibschlüssig entlang Kontaktflächen der Betonelemente (12, 14) des hydraulischen Werkes (10) erstrecken.

5. Verfahren zum Abdecken und Wasserabdichten einer Fuge nach einem der vorstehenden Ansprüche, **gekennzeichnet durch** Überlappen einer weiteren schützenden Textilschicht (29) über die wasserabdichtende Membran (21), und Falten in eine Schleife der weiteren schützenden Textilschicht (29) gegen die wasserabdichtende Membran (21) innerhalb der Fuge (16).

6. Verfahren zum Abdecken und Wasserabdichten einer Fuge nach den vorstehenden Ansprüchen, **gekennzeichnet durch** Falten in eine Schleife der wasserabdichtenden Membran (21), der Trägerschicht (23) und der schützenden Textilschicht (29), während sie in Kontakt miteinander gehalten werden.

7. Vorrichtung, die zum Abdecken und Wasserabdichten eines Spalts (18) einer Fuge (16) zwischen Betonelementen (12, 14) in hydraulischen Werken (10) geeignet ist, gemäß dem Verfahren nach einem oder mehreren der Ansprüche 1 bis 6, wobei die Abdeckvorrichtung (17) mindestens eine flexible wasserabdichtende Membran (21) aus elastisch nachgiebigem Elastomermaterial und eine flexible Textilträgerschicht (23) umfasst, die beide abdichtend entlang ihrer Kanten in Längsrichtung an den Betonelementen (12, 14) der Fuge (16) fixiert sind, und
wobei die flexible Trägerschicht (23) mit einem elastischen Modul (E2) konfiguriert ist, das höher ist als das elastische Modul (E1) der wasserabdichtenden Membran (21);
**dadurch gekennzeichnet, dass** die Abdeckvorrichtung (17) besteht aus:
einem flexiblen Abdeckstreifen (17), der eine flexible wasserabdichtende Membran (21) umfasst, die auf der flexiblen Trägerschicht (23) auf mindestens einer Seite der wasserabdichtenden Membran (21) überlagert ist;
wobei die wasserabdichtende Membran (21) und die überlagerte Trägerschicht (23) ein Band in Längsrichtung umfassen, das in eine Schleife (21A, 23A) gefaltet ist, die sich in Längsrichtung zu der Fuge (16) erstreckt; und
wobei die flexible wasserabdichtende Membran (21) und die flexible Trägerschicht (23) überlagerte zentrale Bänder (21A, 23A) umfassen, die frei gleitbar und in eine Schleife gefaltet sind, die sich in Längsrichtung zu den Fugen (16) erstrecken.

8. Vorrichtung zum Abdecken und Wasserabdichten einer Fuge (16) nach Anspruch 7, **dadurch gekennzeichnet, dass** das elastische Modul (E2) der Trägerschicht (23) von 40 bis 70 Mal und mehr höher ist als das elastische Modul (E1) der wasserabdichtenden Membran (21).

9. Vorrichtung zum Abdecken und Wasserabdichten einer Fuge (16) nach Anspruch 7, **dadurch gekennzeichnet, dass** das elastische Modul (E1) der wasserabdichtenden Membran (21) bei zwischen 0,010 und 0,030 GPa bei Umgebungstemperatur umfasst ist, während das elastische Modul der Trägerschicht (22) bei zwischen 2 und 8 GPa umfasst ist.

10. Vorrichtung zum Abdecken und Wasserabdichten einer Fuge (16) nach Anspruch 7, **dadurch gekennzeichnet, dass** sich die flexible Trägerschicht (23) mit Seitenflügeln (23B) erstreckt, die reibschlüssig in Kontakt mit zugewandten Flächen der Betonelemente (12, 14) des hydraulischen Werkes (10) stehen.

11. Vorrichtung zum Abdecken und Wasserabdichten einer Fuge (16) nach Anspruch 7, **dadurch gekennzeichnet, dass** die Trägerschicht (23) aus einem faserverstärkten Geotextil besteht.

## Revendications

1. Procédé pour couvrir et imperméabiliser un espace (18) d'un joint (16) entre des éléments en béton opposés (12, 14) d'un ouvrage hydraulique (10) par une bandelette de couverture (17) pliée transversalement et s'étendant longitudinalement le long de l'espace (18), fixée de manière étanche aux éléments en béton (12, 14) le long de bords latéraux allongés,
dans lequel la bandelette de couverture (17) comprend au moins une membrane imperméabilisante souple (21) en matériau élastomère ayant un premier module élastique (E1), et au moins une couche de support souple (23) en matériau textile synthétique ayant un deuxième module élastique (E2) supérieur au premier module élastique (E1) de la membrane imperméabilisante (21) ;
**caractérisé par** les étapes consistant à
superposer la membrane imperméabilisante souple (21) et la couche de support souple (23) ;
plier transversalement la membrane imperméabilisante (21) et la couche de support (23) de la bandelette de couverture (17) ;
déposer la bandelette pliée (17) enjambant l'espace (18) du joint (16) ;
fixer de manière étanche les bords latéraux allongés de la bandelette de couverture pliée (17) aux éléments en béton (12, 14) en gardant la couche de support (23) face aux éléments en béton (12, 14) du joint (16) ; et
permettre un mouvement libre relatif entre la membrane imperméabilisante (21) et la couche de support (23) superposées de la bandelette de couverture pliée (17).

2. Procédé pour couvrir et imperméabiliser un joint (16) selon la revendication 1, **caractérisé par** le pliage en une boucle (21A, 23A) d'une bande centrale de la membrane imperméabilisante (21) et de la couche de support souple (23), directement à l'intérieur de l'espace (18) du joint (16) entre lesdits éléments en béton (12, 14) de l'ouvrage hydraulique (10).

3. Procédé pour couvrir et imperméabiliser un joint (16) selon la revendication 1, **caractérisé par** le pliage en une boucle (21A, 23A) d'une bande centrale de la membrane imperméabilisante (21) et de la couche de support souple (23), à l'extérieur du joint (16) en faisant passer successivement la bandelette de couverture pliée (17) dans l'espace (18) du joint (16).

4. Procédé pour couvrir et imperméabiliser un joint (16) selon l'une quelconque des revendications précédentes, **caractérisé par** la configuration de la couche de support (23) avec des ailettes latérales (23B) s'étendant par frottement le long de surfaces de contact des éléments en béton (12, 14) de l'ouvrage hydraulique (10).

5. Procédé pour couvrir et imperméabiliser un joint selon l'une quelconque des revendications précédentes, **caractérisé par** le chevauchement d'une couche textile protectrice supplémentaire (29) sur la membrane imperméabilisante (21), et le pliage en une boucle de la couche textile protectrice supplémentaire (29) contre la membrane imperméabilisante (21) à l'intérieur du joint (16).

6. Procédé pour couvrir et imperméabiliser un joint selon les revendications précédentes, **caractérisé par** le pliage en une boucle de la membrane imperméabilisante (21), de la couche de support (23) et de la couche textile protectrice (29) tout en les maintenant en contact les unes avec les autres.

7. Dispositif approprié pour couvrir et imperméabiliser un espace (18) d'un joint (16) entre des éléments en béton (12, 14) dans des ouvrages hydrauliques (10) selon le procédé d'une ou plusieurs revendications 1 à 6, dans lequel le dispositif de couverture (17) comprend au moins une membrane imperméabilisante souple (21) en matériau élastomère élastiquement déformable et une couche de support textile souple (23), fixées l'une et l'autre de manière étanche le long de leurs bords longitudinaux aux éléments en béton (12, 14) du joint (16), et
dans lequel la couche de support souple (23) est configurée avec un module élastique (E2) supérieur au module élastique (E1) de la membrane imperméabilisante (21) ;
**caractérisé en ce que** le dispositif de couverture (17) est constitué de :
une bandelette de couverture souple (17) comprenant une membrane imperméabilisante souple (21) superposée à la couche de support souple (23) sur au moins un côté de la membrane imperméabilisante (21) ;
dans lequel la membrane imperméabilisante (21) et la couche de support superposée (23) comprennent une bande longitudinale pliée en une boucle (21A, 23A) s'étendant longitudinalement jusqu'au joint (16) ; et
dans lequel la membrane imperméabilisante souple (21) et la couche de support souple (23) comprennent des bandes centrales superposées (21A, 23A), pouvant coulisser librement et pliées en une boucle qui s'étend longitudinalement jusqu'aux joints (16).

8. Dispositif pour couvrir et imperméabiliser un joint (16) selon la revendication 7, **caractérisé en ce que** le module élastique (E2) de la couche de support (23) est de 40 à au moins 70fois plus élevé que le module élastique (E1) de la membrane imperméabilisante (21).

9. Dispositif pour couvrir et imperméabiliser un joint (16) selon la revendication 7, **caractérisé en ce que** le module élastique (E1) de la membrane imperméabilisante (21) est compris entre 0,010 et 0,030 GPa à la température ambiante, tandis que le module élastique de la couche de support (22) est compris entre 2 et 8 GPa.

10. Dispositif pour couvrir et imperméabiliser un joint (16) selon la revendication 7, **caractérisé en ce que** la couche de support souple (23) s'étend avec des ailettes latérales (23B), venant en contact par frottement avec des surfaces en vis-à-vis desdits éléments en béton (12, 14) de l'ouvrage hydraulique (10).

11. Dispositif pour couvrir et imperméabiliser un joint (16) selon la revendication 7 **caractérisé en ce que** la couche de support (23) est constituée d'un géotextile renforcé par des fibres.
